# EUROPEAN PATENT APPLICATION

(11) **EP 2 745 934 A1**
(43) Date of publication of application: **25.06.2014**
(21) Application number: 11870926.0
(22) Date of filing: 18.08.2011
(51) Int. Cl.: B01J 35/04, B01D 53/94, B01J 29/85, C01B 37/08, C01B 39/54

(54) **HONEYCOMB STRUCTURE AND EXHAUST GAS SCRUBBER**

(71) Applicant: IBIDEN CO., LTD., Ogaki-shi Gifu 503-8604 (JP)
(72) Inventor: MIYASHITA, Toshiyuki, Ibi-Gun Gifu 501-0695 (JP); FUJII, Shin, Ibi-Gun Gifu 501-0695 (JP)
(74) Representative: Walcher, Armin
(86) International application number: PCT/JP2011/068705
(87) International publication number: WO 2013/024546

(57) **Abstract**

A honeycomb structure includes honeycomb units which contain silicoaluminophosphate particles and an inorganic binder and are provided with a plurality of cells that extend in the longitudinal direction from a first end surface to a second end surface of the honeycomb structure and are partitioned by cell walls, in which Si/(Al+P) of the silicoaluminophosphate particles is in a range of 0.16 to 0.33 by molar ratio, a thickness of the cell wall is in a range of 0.10 mm to 0.25 mm, a cell density of the cells is in a range of 93 cells/cm² to 155 cells/cm², and a ratio R/L of a diameter R of the honeycomb structure to a total length L of the honeycomb structure is 1.0 or more.

## Description

### Technical Field

The present invention relates to a honeycomb structure and an exhaust gas purifying apparatus.

### Background Art

While there have been a number of techniques developed to purify exhaust gas from automobiles, it is still difficult to say that a satisfactory exhaust gas countermeasure has been developed in consideration of an increase in traffic volume. In Japan and also occurring throughout the world, there is a tendency of automotive exhaust gas regulations becoming stricter.

In order to cope with the regulations, in exhaust gas purifying systems, a catalyst carrier that can treat a predetermined component in exhaust gas is in use. In addition, a honeycomb structure is known as a member for the catalyst carrier.

The honeycomb structure includes, for example, a plurality of cells (through holes) extending in the longitudinal direction from one end surface to the other end surface of the honeycomb structure, and the cells are mutually partitioned by a cell wall carrying a catalyst. Therefore, in a case in which exhaust gas is circulated in the honeycomb structure, substances in the exhaust gas, such as HC, CO and/or NOx, are modified using a catalyst supported in the cell wall, and the components in the exhaust gas can be treated.

Particularly, in systems called selective catalytic reduction (SCR) systems, it is possible to decompose NOx in exhaust gas into nitrogen and water using ammonia.

Zeolite is known as a material that adsorbs ammonia in the SCR systems. For example, PTL 1 describes a honeycomb structure including a honeycomb unit that contains zeolite as inorganic particles.

In recent years, the use of phosphate-based zeolite such as SAPO as inorganic particles has been proposed in order to obtain better NOx purification performance (PTL 2).

### Citation List

### Patent Literature

[PTL 1] PCT International Publication No. WO 09/141897
[PTL 2] PCT International Publication No. WO 06/137149

### Summary of Invention

### Technical Problem

Meanwhile, silicoaluminophosphate (SAPO) particles have a characteristic of contracting their volume when absorbing moisture and expanding their volume when emitting moisture. Therefore, in a case in which the honeycomb unit that configures the honeycomb structure includes SAPO particles as the inorganic particles, the volume of the honeycomb structure contracts and expands in accordance with the adsorption and desorption of moisture in the environment while the honeycomb structure is being manufactured or used. Furthermore, when the volume of the honeycomb structure contracts and expands locally or frequently, cracking or fracture occurs in the honeycomb structure, and thus there is a problem in that the honeycomb structure is damaged.

The invention has been made in consideration of the above problem, and an object of the invention is to provide a honeycomb structure which includes honeycomb units containing SAPO as inorganic particles and is not easily damaged while being manufactured or used.

### Solution to Problem

The invention provides a honeycomb structure including honeycomb units which contain silicoaluminophosphate particles and an inorganic binder and are provided with a plurality of cells that extend in the longitudinal direction from a first end surface to a second end surface of the honeycomb structure and are partitioned by cell walls,
in which Si/(Al+P) of the silicoaluminophosphate particles is in a range of 0.16 to 0.33 by molar ratio,
a thickness of the cell wall is in a range of 0.10 mm to 0.25 mm,
a cell density of the cells is in a range of 93 cells/cm² to 155 cells/cm², and
a ratio R/L of a diameter R of the honeycomb structure to a total length L of the honeycomb structure is 1.0 or more.

Here, in the honeycomb structure of the invention, the silicoaluminophosphate particles may have a specific surface area in a range of 250 m²/g to 450 m²/g.

In addition, the honeycomb structure of the invention may contain the silicoaluminophosphate in a range of 230 g/L to 360 g/L with respect to the entire honeycomb structure.

In addition, in the honeycomb structure of the invention, the ratio R/L may be in a range of 1.0 to 5.0.

In addition, in the honeycomb structure of the invention, the honeycomb unit may further contain an inorganic fiber.

In addition, in the honeycomb structure of the invention, the inorganic fiber may be one or more selected from a group consisting of alumina, silica, silicon carbide, silica alumina, glass, potassium titanate and aluminum borate.

In addition, the honeycomb structure of the invention may be configured by joining a plurality of honeycomb units through an adhesion layer.

Furthermore, the invention provides an exhaust gas purifying apparatus including:
a honeycomb structure;
a holding seal material installed around the honeycomb structure; and
a metal container accommodating the honeycomb structure around which the holding seal material is installed,
in which the honeycomb structure is a honeycomb structure having the above characteristics.

Here, in the exhaust gas purifying apparatus according to the invention,
an NOx purification rate may be 85% or more in a case in which 200°C-hot simulant gas is made to flow so that a space velocity becomes 80000/h,
when a volume of the honeycomb structure is defined as an apparent volume (m³) of the honeycomb structure in a case in which the honeycomb structure is assumed to be a dense bulk body having no cell and no pore, the space velocity may be a ratio of a flow rate (m³/h) of the simulant gas to the apparent volume (m³) of the honeycomb structure, and,
the simulant gas may contain nitrogen monoxide at a concentration of 350 ppm, ammonia at a concentration of 350 ppm, oxygen at a concentration of 10%, water at a concentration of 5% and carbon dioxide at a concentration of 5 vol% with a balance of nitrogen.

### Advantageous Effects of Invention

In the invention, it becomes possible to provide a honeycomb structure which includes honeycomb units containing SAPO as inorganic particles and is not easily damaged while being manufactured or used.

### Brief Description of Drawings

Fig. 1 is a perspective view schematically illustrating an example of a honeycomb structure of the invention.
Fig. 2 is a perspective view schematically illustrating an example of a honeycomb unit that configures the honeycomb structure of Fig. 1.
Fig. 3A is a pattern diagram of a skeleton structure of ordinary SAPO particles, and Fig. 3B is a view schematically illustrating a moisture adsorption reaction of the SAPO particles.
Fig. 4A is a pattern diagram of a skeleton structure of SAPO particles according to the invention, and Fig. 4B is a view schematically illustrating a moisture adsorption reaction of the SAPO particles of the invention.
Fig. 5 is a perspective view schematically illustrating an example of another configuration of the honeycomb structure of the invention.
Fig. 6 is a perspective view schematically illustrating an example of a honeycomb unit that configures the honeycomb structure of Fig. 5.
Fig. 7 is a perspective view schematically illustrating an example of the other configuration of the honeycomb structure of the invention.

### Description of Embodiments

Hereinafter, the characteristics of the invention will be described using the accompanying drawings.

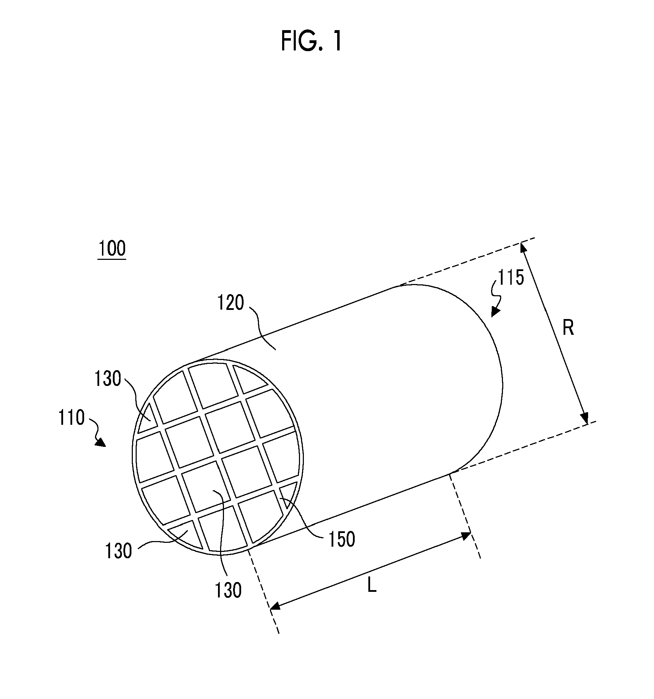

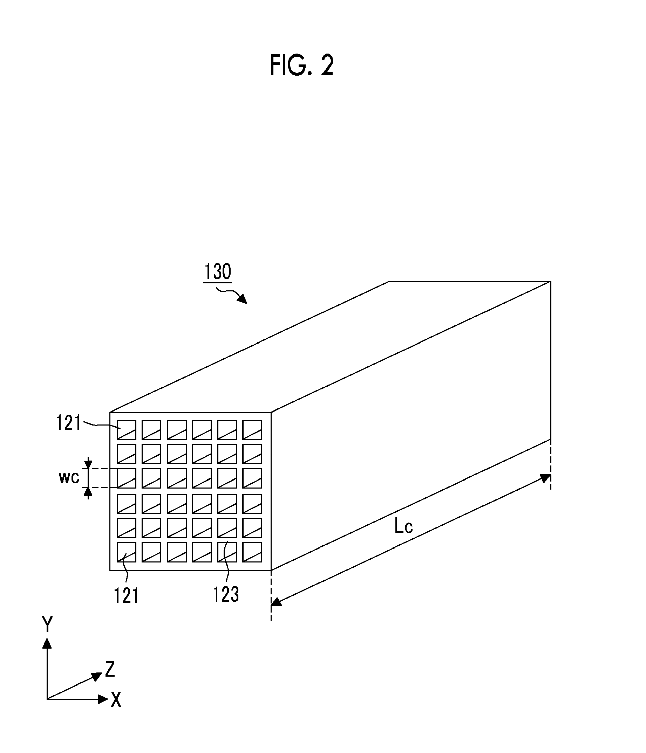

Fig. 1 schematically illustrates an example of a structure of a honeycomb structure according to the invention. Fig. 2 schematically illustrates an example of a honeycomb unit that is a basic unit of the honeycomb structure illustrated in Fig. 1.

As illustrated in Fig. 1, a honeycomb structure 100 includes two end surfaces 110 and 115. In addition, in an ordinary case, an outer circumference coating layer 120 is installed on an outer circumferential surface of the honeycomb structure 100 excluding both end surfaces.

The honeycomb structure 100 is configured by, for example, joining a plurality of column-shaped ceramic honeycomb units 130 as illustrated in Fig. 2 (16 honeycomb units (4x4 array) in the example of Fig. 1) through an adhesion layer 150, and then cutting an outer circumferential side into a predetermined shape (a circular column shape in the example of Fig. 1).

As illustrated in Fig. 2, the honeycomb unit 130 extends in the longitudinal direction of the honeycomb unit from one end to the other end, and includes a plurality of cells (through holes) 121 opened on both end surfaces and a cell wall 123 that partitions the cells. In the example of Fig. 2, the cross-section of the cell 121 vertical to the longitudinal direction (Z direction) forms a substantially square shape while the cross-section is not limited thereto.

Meanwhile, in Fig. 2, Lc refers to the total length of the honeycomb unit 130, and We refers to the length of a side of the cell 121.

Here, in general, in a case in which honeycomb units containing phosphate-based zeolite as inorganic particles are used, a honeycomb structure including the above honeycomb units can be used as a catalyst carrier for purifying CO, HC and/or NOx.

Particularly, in the invention, the honeycomb unit 130 contains silicoaluminophosphate (SAPO) particles as inorganic particles, and the honeycomb structure 100 made up of the above honeycomb units 130 can be used in urea SCR systems including a urea tank.

For example, in the urea SCR system, when exhaust gas is circulated in the system, urea accommodated in the urea tank reacts with water in the exhaust gas, thereby generating ammonia (Formula (1)).

CO(NH₂)₂+H₂O→2NH₃+CO₂ Formula (1)

In a case in which the ammonia is infiltrated into the respective cells 121 in the honeycomb units 130 from one end surface (for example, the end surface 110) of the honeycomb structure 100 together with the exhaust gas containing NOx, the reactions of the following formulae (2-1) and (2-2) are caused by the catalytic action of SAPO contained in the cell wall 123.

4NH₃+4NO+O₂→4N₂+6H₂O Formula (2-1)

8NH₃+6NO₂→7N₂+12H₂O Formula (2-2)

After that, the purified exhaust gas is discharged from the other end surface (for example, the end surface 115) of the honeycomb structure 100. As such, when exhaust gas is circulated in the honeycomb structure 100, NOx in the exhaust gas can be treated.

However, SAPO particles have a characteristic of contracting the volume when absorbing moisture and expanding the volume when emitting moisture. Therefore, in a case in which honeycomb units containing the SAPO particles as the inorganic particles are used, the volume of the honeycomb structure (honeycomb units) contracts and expands in accordance with the adsorption and desorption of moisture in the environment while the honeycomb structure is being manufactured or used. Furthermore, when the volume of the honeycomb structure contracts and expands locally or frequently, cracking or fracture occurs in the honeycomb structure, and thus there is a problem in that the honeycomb structure is damaged.

In contrast to what has been described above, the invention provides a honeycomb structure with which the above problem is reduced or solved. That is,
the invention provides a honeycomb structure including honeycomb units which contain silicoaluminophosphate particles and an inorganic binder and are provided with a plurality of cells that extend in the longitudinal direction from a first end surface to a second end surface of the honeycomb structure and are partitioned by cell walls,
in which Si/(Al+P) of the silicoaluminophosphate particles is in a range of 0.16 to 0.33 by molar ratio,
a thickness of the cell wall is in a range of 0.10 mm to 0.25 mm,
a cell density of the cells is in a range of 93 cells/cm² to 155 cells/cm², and
a ratio R/L of a diameter R of the honeycomb structure to a total length L of the honeycomb structure is 1.0 or more.

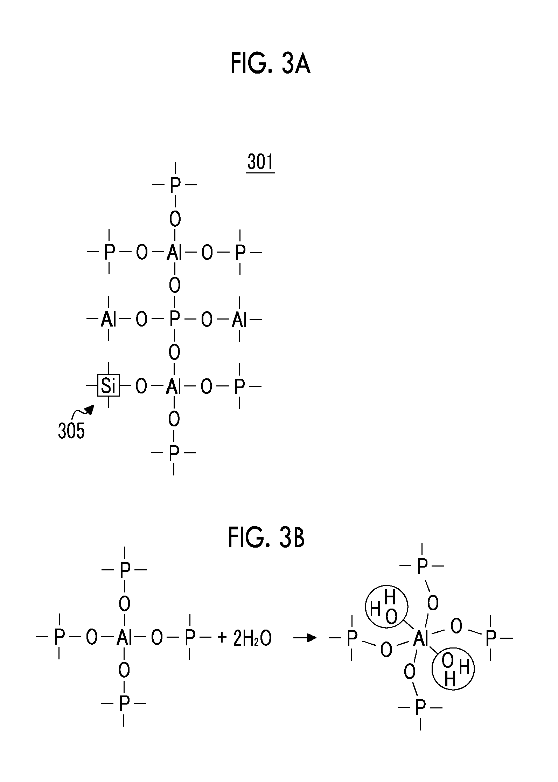

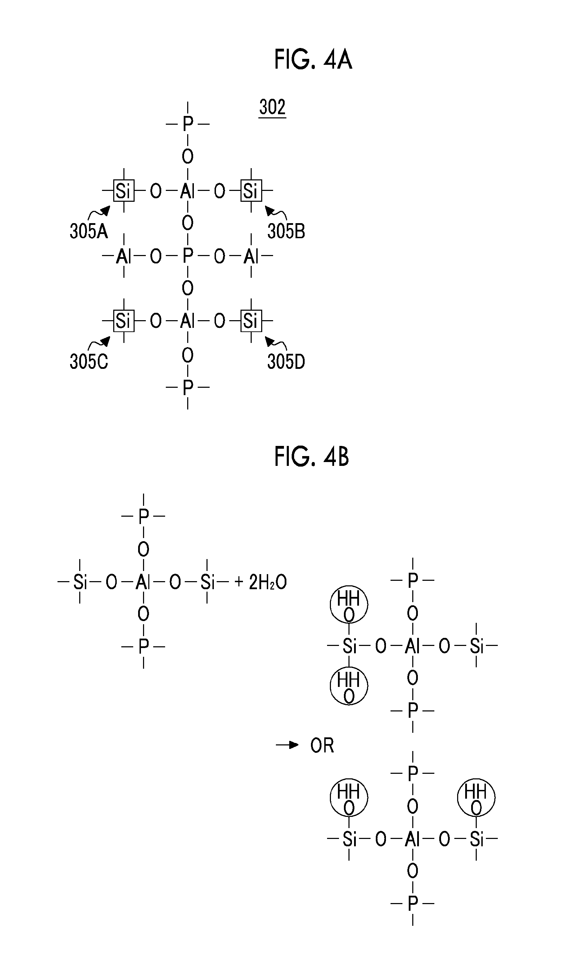

In the invention, the SAPO particles have a characteristics of having a ratio of Si/(Al+P) (molar ratio) in a range of 0.16 to 0.33. The effect will be described with reference to Figs. 3 and 4.

Fig. 3 schematically illustrates a part of a skeleton structure of ordinary SAPO particles of the related art. In addition, Fig. 4 schematically illustrates a part of a skeleton structure of the SAPO particles used in the invention.

Generally, the SAPO particles have a skeleton structure 301 in which an array of an aluminum (Al) atom/ oxygen (O) atom/ phosphorus (P) atom is repeated as illustrated in Fig. 3A. However, some of P atoms are substituted by silicon (Si) atoms. For example, in an example of Fig. 3A, a site 305 of a P atom is substituted by a Si atom. Meanwhile, in an ordinary case, the ratio Si/(Al+P) (molar ratio) in the skeleton structure 301 is approximately 0.1.

Fig. 3B schematically illustrates an example of a reaction in which moisture is adsorbed to the SAPO particles.

There is a tendency of moisture in the environment to be selectively adsorbed particularly to Si atoms and Al atoms in the SAPO skeleton. However, in the case of ordinary SAPO particles (that is, in a case in which the ratio Si/(Al+P) (molar ratio) is approximately 0.1), a relatively larger number of Al atoms are present than Si atoms, and therefore some of H₂O molecules are adsorbed to Al atoms in the SAPO skeleton structure.

In addition, as illustrated in the right side of Fig. 3B, when water molecules are adsorbed to an Al atom, the valence state of the Al atom changes from IV+ to VI+, the skeleton structure of SAPO is strained, and therefore the volume of SAPO contracts.

In addition, in the case of a detachment reaction of water molecules, the converse phenomenon occurs, and the volume of SAPO expands.

Meanwhile, when the amount of Si atoms is increased by substituting P atoms in the skeleton structure of SAPO by Si atoms, the structure skeleton of SAPO is changed as illustrated in Fig. 4A. For example, in an example of a skeleton structure 302 of Fig. 4A, the respective sites 305A to 305D in which P atoms are originally present are occupied by Si atoms.

In the skeleton structure 302, water molecules bond with more Si atoms than Al atoms, and, accordingly, the proportion of water molecules bonded with Al atoms relatively decreases. For example, when water molecules are adsorbed to the skeleton structure 302 of the SAPO particles as illustrated in Fig. 4B, a majority of the water molecules bond with Si atoms.

Here, the Si atom maintains the valence state of IV+ even when water molecules are adsorbed to the Si atom. Therefore, the change (volume contraction) of the skeleton structure of SAPO when water molecules are adsorbed to more Si atoms than Al atoms becomes smaller than the change of the skeleton structure of SAPO when water molecules are adsorbed to more Al atoms than Si atoms. Accordingly, in the case of the skeleton structure 302 as illustrated in Fig. 4A, it becomes possible to further suppress the volume contraction/expansion of the skeleton structure of SAPO caused by the adsorption/desorption of moisture.

In the invention, the ratio Si/(Al+P) (molar ratio) in the SAPO particles is set to a larger value than the value in the related art, approximately 0.1, that is, in a range of 0.16 to 0.33. Therefore, the honeycomb unit 130 of the invention, and, furthermore, the honeycomb structure 100 made up of the honeycomb units can further suppress the influence of the volume change caused by the adsorption/desorption of moisture. In addition, accordingly, it is possible to significantly suppress the occurrence of breakage or fracture of a honeycomb structure (honeycomb unit) while the honeycomb structure 100 is being manufactured or used.

Meanwhile, the above description is what the present inventors have found based on the experiment results. Therefore, in actual cases, the volume contraction/expansion of the SAPO particles may be suppressed using other mechanisms when the ratio Si/(Al+P) (molar ratio) is set in a range of 0.16 to 0.33.

The ratio Si/(Al+P) (molar ratio) is more preferably in a range of 0.16 to 0.28.

Furthermore, in the invention, a countermeasure to suppress the influence of the local volume change caused by moisture adsorption/desorption is applied in terms of the structure of the honeycomb structure 100.

That is, the invention has characteristics of the thickness of the cell wall 123 being in a range of 0.10 mm to 0.25 mm, the cell density of the cells 121 being in a range of 93 cells/cm² to 155 cells/cm², and the ratio R/L of the diameter R of the honeycomb structure to the entire length L of the honeycomb structure 100 being 1.0 or more.

Here, the reason for regulating the thickness of the cell wall 123 in the above range is that, as the thickness of the cell wall 123 decreases, moisture is more uniformly adsorbed to the entire cell wall 123. In addition, in a case in which the thickness of the cell wall 123 is thin, conversely, moisture is relatively uniformly desorbed from the entire cell wall 123. Therefore, when the thickness of the cell wall 123 is set to 0.25 mm or less, it becomes possible to significantly suppress the local contraction/expansion of the volume of the honeycomb unit 130. However, when the thickness of the cell wall 123 becomes extremely thin, there is a problem with strength. Therefore, the thickness of the cell wall 123 is preferably 0.10 mm or more.

In addition, the reason for regulating the cell density of the cells 121 in the above range is that, in a case in which a relatively large number of the cells 121 are present in the unit area, the surface area of the honeycomb unit 130 that comes into contact with moisture increases, and, accordingly, moisture is uniformly adsorbed to the entire honeycomb unit 130. In addition, in this case, conversely, moisture is also relatively uniformly desorbed from the entire honeycomb unit 130. Therefore, when the cell density is set to 93 cells/cm² or more, it becomes possible to significantly suppress the local contraction/expansion of the volume of the honeycomb unit 130. However, when the cell density becomes extremely large, there is a problem in that the pressure loss of the honeycomb structure increases. Therefore, the cell density is preferably 155 cells/cm² or less.

Furthermore, the reason for setting the ratio R/L to 1.0 or more in the honeycomb structure is to ensure the adsorption/desorption state of moisture to be as uniform as possible in the entire honeycomb structure. That is, when the ratio R/L is set to a relatively large value, that is, 1.0 or more, it becomes possible to cause the adsorption/desorption of moisture in the center portion of the honeycomb structure 100 in the longitudinal direction as rapidly as in the end portions 110 and 115. In addition, accordingly, it becomes possible to significantly suppress the local contraction/expansion of the volumes of the honeycomb unit 130 and the honeycomb structure 100.

Meanwhile, the ratio R/L is preferably 5.0 or less. When the ratio R/L exceeds 5.0, a sufficient holding force cannot be ensured when the honeycomb structure is accommodated in a metal container. The ratio R/L is preferably in a range of 1.0 to 5.0, and more preferably in a range of 1.0 to 1.9. In addition, the entire length L of the honeycomb structure 100 is preferably 300 mm or less.

Meanwhile, the length L of the honeycomb structure refers to the length from one end surface (first end surface) to the other end surface (second end surface).

As such, in the invention, the volume change of the honeycomb structure is significantly suppressed by adjusting the value of the ratio Si/(Al+P) (molar ratio) of the SAPO particles so as to make moisture adsorbed and desorbed at Si atom sites, and the structure parameter of the honeycomb structure is adjusted so that moisture is relatively uniformly adsorbed/desorbed in the entire honeycomb structure.

Therefore, in the invention, the local volume change of the honeycomb structure caused by the adsorption/desorption of moisture is significantly suppressed, whereby it is possible to provide a honeycomb structure that is not easily damaged while being manufactured or used.

Meanwhile, in the above description, the characteristics of the invention have been described using the honeycomb structure 100 configured by joining a plurality of the column-shaped honeycomb units 130 as illustrated in Fig. 2 through the adhesion layer 150 as an example. However, the invention is not limited to the honeycomb structure in the above configuration.

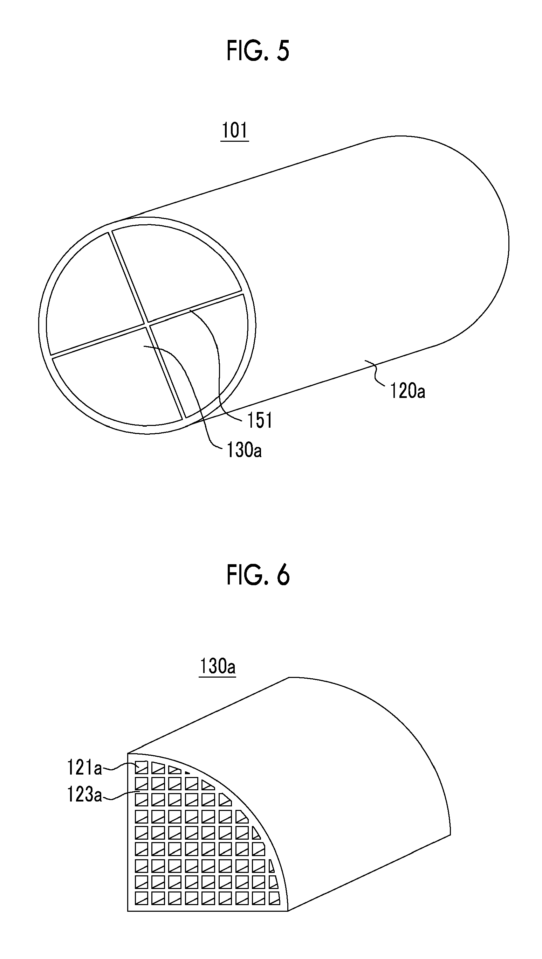

Fig. 5 illustrates an example of another configuration of the honeycomb structure of the invention. In addition, Fig. 6 schematically illustrates an example of a honeycomb unit that configures the honeycomb structure of Fig. 5.

As illustrated in Fig. 5, the honeycomb structure 101 is configured by joining a plurality (four in an example of Fig. 5) of ceramic honeycomb units 130a having a fan-like cross-sectional shape vertical to the longitudinal direction through the adhesion layer 151. An outer circumference coating layer 120a is installed on an outer circumferential surface of the honeycomb structure 101 excluding both end surfaces.

As illustrated in Fig. 6, each honeycomb unit 130a includes a plurality of cells (through holes) 121a which extend in the longitudinal direction of the honeycomb unit 130a from one end to the other end and are opened on both end surfaces and a cell wall 123a that partitions the cells 121a. In the example of Fig. 6, the cross-section of the cell 121a vertical to the longitudinal direction (Z direction) forms a substantially square shape while the cross-section is not limited thereto.

The honeycomb structure of the invention may be configured as described above.

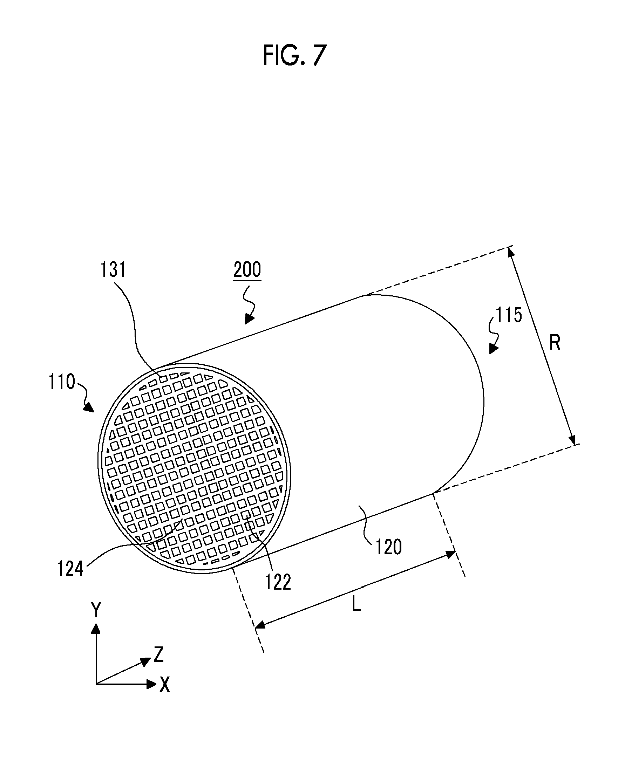

In addition, Fig. 7 illustrates an example of the other configuration of the honeycomb structure of the invention.

The honeycomb structure 200 is made up of a sole honeycomb unit 131 as illustrated in Fig. 7. The honeycomb unit 131 has a circular column shape, and both end surfaces of the honeycomb unit 131 form the end surfaces 110 and 115 of the honeycomb structure 200.

The honeycomb unit 131 contains the SAPO particles. In addition, similarly to the honeycomb unit 130 illustrated in Fig. 2, the honeycomb unit 131 includes a plurality of cells 122 which extend in the longitudinal direction from one end to the other end and are opened on both end surfaces and a cell wall 124 that partitions the cells. In an example of Fig. 7, the cross-section of the cell 122 vertical to the longitudinal direction (Z direction) forms a substantially square shape while the cross-section is not limited thereto.

Meanwhile, in the example of Fig. 7, the outer circumference coating layer 120 is installed on an outer circumferential surface of the honeycomb structure 200 excluding the end surfaces. However, the outer circumference coating layer may not be installed.

The honeycomb structure 200 has the above characteristics, that is, the ratio Si/(Al+P) (molar ratio) of the SAPO particles being in a range of 0.16 to 0.33, the thickness of the cell wall 124 being in a range of 0.10 mm to 0.25 mm, the cell density of the cells 122 being in a range of 93 cells/cm² to 155 cells/cm², and the ratio R/L of the diameter R of the honeycomb structure 200 to the entire length L of the honeycomb structure 200 being 1.0 or more.

It is evident to a person skill in the art that the above effects of the invention can be obtained even in the honeycomb structure 200.

### (Configuration of the honeycomb structure)

Next, the respective components of the honeycomb structure 100 illustrated in Fig. 1 will be simply described as an example.

### (Honeycomb unit 130)

The honeycomb unit 130 contains the SAPO particles as the inorganic particles.

As described above, the ratio Si/(Al+P) (molar ratio) of the SAPO particles is in a range of 0.16 to 0.33. In addition, the SAPO particles may have a specific surface area in a range of 250 m²/g to 450 m²/g.

The SAPO particles may be ion-exchanged with Fe, Cu, Ni, Co, Zn, Mn, Ti, Ag or V. Among the above, the SAPO particles are particularly preferably ion-exchanged with Fe or Cu.

In addition, the honeycomb unit 130 may contain inorganic particles other than SAPO. The total content of the inorganic particles in the honeycomb unit may be in a range of 230 g/L to 360 g/L with respect to the entire honeycomb unit.

The honeycomb unit 130 preferably contains SAPO in a range of 230 g/L to 360 g/L with respect to the entire honeycomb structure.

The honeycomb unit 130 contains an inorganic binder. In addition, the honeycomb unit 130 may further contain an inorganic fiber.

The inorganic binder contained in the honeycomb unit is desirably at least one selected from a group consisting of an alumina sol, a silica sol, a titania sol, water glass, sepiolite, attapulgite and boehmite.

In addition, in a case in which an inorganic fiber is added to the honeycomb unit, a material of the inorganic fiber is desirably alumina, silica, silicon carbide, silica alumina, glass, potassium titanate, aluminum borate or the like. The material may be solely used, or two or more of the materials may be jointly used. Among the above materials, alumina is desirable.

As described above, the cell density of the honeycomb unit 130 is in a range of 93 cells/cm² to 155 cells/cm². In addition, the thickness of the cell wall 123 in the honeycomb unit 130 is in a range of 0.1 mm to 0.25 mm.

### (Adhesion layer 150)

The adhesion layer 150 in the honeycomb structure 100 is formed using paste for the adhesion layer as a raw material.

The thickness of the adhesion layer is preferably in a range of 0.3 mm to 2.0 mm. This is because, when the thickness of the adhesion layer is less than 0.3 mm, a sufficient joining strength cannot be obtained. In addition, when the thickness of the adhesion layer exceeds 2.0 mm, the pressure loss of the honeycomb structure increases. Meanwhile, the number of the honeycomb units being joined is appropriately selected depending on the size of the honeycomb structure.

The paste for the adhesion layer contains at least one of inorganic particles, an inorganic binder and an inorganic fiber, and, furthermore, may contain an organic binder as necessary.

The inorganic particles contained in the paste for the adhesion layer may be the same as or different from the inorganic particles contained in the honeycomb unit.

### (Outer circumference coating layer 120)

The outer circumference coating layer 120 of the honeycomb structure 100 contains at least one of inorganic particles, an inorganic binder and an inorganic fiber, and, furthermore, may be formed using paste containing an organic binder as a raw material as necessary.

The inorganic particles contained in the outer circumference coating layer 120 may be the same as or different from the inorganic particles contained in the honeycomb unit.

The outer circumference coating layer 120 may be the same material as or a different material from the adhesion layer 150. A balloon that is a minute hollow sphere made of an oxide-based ceramic, spherical acrylic particles or a pore-forming agent such as graphite may be added to the paste for the adhesion layer or paste for forming the outer circumference coating layer as necessary. The final thickness of the outer circumference coating layer is preferably in a range of 0.1 mm to 2.0 mm.

### (Honeycomb structure 100)

As described above, the honeycomb structure has a shape with a value of the diameter R/the total length L of 1.0 or more. Particularly, the total length of the honeycomb structure 100 is preferably 300 mm or less.

### (Method for manufacturing the honeycomb structure according to the invention)

Next, an example of the method for manufacturing the honeycomb structure according to the invention will be described. Meanwhile, herein, a method for manufacturing the honeycomb structure 100 in the structure illustrated in Fig. 1 will be described. However, it is evident to a person skilled in the art that the honeycomb structure 200 in the structure illustrated in Fig. 7 can also be manufactured using the same method except for a step of joining the honeycomb units 130 through the adhesion layer.

First, extrusion and the like are carried out using raw material paste which contains inorganic particles including the SAPO particles, and the inorganic binder as main components, and, furthermore, to which the inorganic fiber has been added as necessary, thereby producing a honeycomb unit compact.

In addition to the inorganic fiber, an organic binder, a dispersion medium and a molding assistant may be appropriately added to the raw material paste depending on moldability. The organic binder is not particularly limited, and examples thereof include one or more organic binders selected from methyl cellulose, carboxymethyl cellulose, hydroxyethyl cellulose, polyethylene glycol, phenol resins, epoxy resins and the like. The blending amount of the organic binder is preferably in a range of 1 part by weight to 10 parts by weight with respect to a total of 100 parts by weight of the inorganic particles, the inorganic binder and the inorganic fiber.

The dispersion medium is not particularly limited, and examples thereof include water, organic solvents (benzene and the like), alcohols (methanol and the like), and the like. The molding assistant is not particularly limited, and examples thereof include ethylene glycol, dextrin, aliphatic acids, aliphatic soap, polyalcohols and the like.

The raw material paste is not particularly limited, the components are preferably mixed and kneaded, for example, the components may be mixed using a mixer, an attritor or the like, and may be sufficiently kneaded using a kneader or the like. A method for molding the raw material paste is not particularly limited, and, for example, the raw material paste is preferably molded into a shape having cells using extrusion and the like.

Next, the obtained honeycomb unit compact is preferably dried. A dryer used for drying is not particularly limited, and examples thereof include a microwave dryer, a hot air dryer, a dielectric dryer, a reduced-pressure dryer, a vacuum dryer, a freeze dryer and the like. In addition, the obtained honeycomb unit compact is preferably defatted. The defatting conditions are not particularly limited, can be appropriately selected depending on the kinds and amounts of organic substances contained in the honeycomb unit compact, and the honeycomb unit compact is preferably defatted at 400°C for 2 hours. Furthermore, the obtained honeycomb unit compact is fired. The firing conditions are not particularly limited, but the firing temperature is preferably in a range of 600°C to 1200°C, and more preferably in a range of 600°C to 1000°C. This is because, when the firing temperature is lower than 600°C, sintering does not proceed, and the strength of the honeycomb unit decreases, and, when the firing temperature exceeds 1200°C, sintering excessively proceeds.

Next, the paste for the adhesion layer which will form the adhesion layer is applied in a uniform thickness to the side surfaces of the honeycomb unit obtained through the above steps, and then other honeycomb units are sequentially stacked through the paste for the adhesion layer. This step is repeated, thereby producing a honeycomb unit collection with a desired dimension (for example, a 4x4 array of the honeycomb units).

Next, the honeycomb unit collection is heated so as to dry and solidify the paste for the adhesion layer, thereby forming an adhesion layer and fixing the honeycomb units.

Next, the honeycomb unit collection is cut into, for example, a circular column shape using a diamond cutter or the like, thereby producing a honeycomb structure with a necessary outer circumferential shape.

Next, the paste for the outer circumference coating layer is applied to the outer circumferential surface (side surface) of the honeycomb structure, then, dried and solidified, thereby forming an outer circumference coating layer.

After a plurality of the honeycomb units are joined using the adhesion layer (in a case in which the outer circumference coating layer is provided, after the outer circumference coating layer is formed), the honeycomb structure is preferably defatted. This treatment can defat and remove the organic binder in a case in which the paste for the adhesion layer and the paste for the outer circumference coating layer contain the organic binder. The defatting conditions are appropriately selected depending on the kinds and amounts of organic substances contained, and the honeycomb structure is preferably defatted at approximately 600°C for 1 hour.

The honeycomb structure illustrated in Fig. 1 can be produced using the above steps.

### Examples

Hereinafter, examples of the invention will be described.

### (Example 1)

First, the SAPO particles (average particle diameter of 3 µm, 2800 parts by weight), boehmite (inorganic binder, 1120 parts by weight), an alumina fiber (average fiber diameter of 100 µm, average fiber length of 6 µm, 270 parts by weight), methyl cellulose (380 parts by mass), oleic acid (molding assistant, 310 parts by weight) and water (2400 parts by weight) were added, mixed and kneaded, thereby producing a mixed composition.

The SAPO particles that had been already ion-exchanged with 2.7 wt% of Cu were used. The ratio Si/(Al+P) (molar ratio) of the SAPO particles was 0.16. In addition, the specific surface area of the SAPO particles was 300.

Next, the mixed composition was extruded using an extruder, thereby obtaining a honeycomb unit compact.

Next, the honeycomb unit compact was sufficiently dried using a reduced-pressure microwave dryer and held at 400°C for 2 hours so as to be defatted. After that, the honeycomb unit compact was held at 700°C for 8 hours so as to be fired, thereby producing a column-shaped honeycomb unit (total length of 200 mm) having a quarter circular fan-like cross-sectional shape vertical to the longitudinal direction of the honeycomb unit.

In the honeycomb unit, the thickness of the cell wall was 0.20 mm, and the cell density was 124 cells/cm². In addition, the amount of the SAPO particles contained in 1 liter of the volume of the honeycomb unit was 330 g.

As a result of visually observing the appearance of the honeycomb unit, any abnormality, particularly, cracking, breakage or the like was not observed in the honeycomb unit.

Next, the side surfaces of four honeycomb units configured as described above were joined through the paste for the adhesion layer, thereby producing a circular column-shaped honeycomb structure having a total length L of 200 mm and a diameter R of 267 mm (that is, R/L=1.34). The paste for the adhesion layer used had the following composition:

| | |
|---|---|
| Ceramic fiber | 16.2 wt% |
| Silica glass | 51.9 wt% |
| Carboxymethyl cellulose | 0.1 wt% |
| Silica sol | 28.9 wt% |
| Polyvinyl alcohol | 0.8 wt% |
| Non-ionic surfactant | 1.9 wt% |
| Organic balloon | 0.2 wt% |

The thickness of the adhesion layer was set to 1.0 mm. The paste for the adhesion layer was defatted and solidified by carrying out a thermal treatment at 600°C for 1 hour.

As a result, a honeycomb structure according to Example 1 was obtained.

### (Example 2)

A honeycomb structure according to Example 2 was produced using the same steps as in Example 1.

However, in Example 2, the thickness of the cell wall in a honeycomb unit was set to 0.10 mm, and the cell density was set to 155 cells/cm². Other conditions were the same as in the case of Example 1.

Meanwhile, as a result of producing the honeycomb unit and then visually observing the appearance of the honeycomb unit, any abnormality, particularly, cracking, breakage or the like was not observed in the honeycomb unit.

### (Example 3)

A honeycomb structure according to Example 3 was produced using the same steps as in Example 1.

However, in Example 3, the thickness of the cell wall in a honeycomb unit was set to 0.25 mm, and the cell density was set to 93 cells/cm². Other conditions were the same as in the case of Example 1.

Meanwhile, as a result of producing the honeycomb unit and then visually observing the appearance of the honeycomb unit, any abnormality, particularly, cracking, breakage or the like was not observed in the honeycomb unit.

### (Example 4)

A honeycomb structure according to Example 4 was produced using the same steps as in Example 1.

However, in Example 4, the thickness of the cell wall in a honeycomb unit was set to 0.20 mm, and the cell density was set to 124 cells/cm². In addition, the total length L of the honeycomb structure was set to 158 mm and the diameter R was set to 300 mm (that is, the ratio R/L=1.90). Other conditions were the same as in the case of Example 1.

Meanwhile, as a result of producing the honeycomb unit and then visually observing the appearance of the honeycomb unit, any abnormality, particularly, cracking, breakage or the like was not observed in the honeycomb unit.

### (Example 5)

A honeycomb structure according to Example 5 was produced using the same steps as in Example 4.

However, in Example 5, the total length L of the honeycomb structure was set to 242.5 mm and the diameter R was set to 242.5 mm (therefore, the ratio R/L=1.00). Other conditions were the same as in the case of Example 4.

Meanwhile, as a result of producing a honeycomb unit and then visually observing the appearance of the honeycomb unit, any abnormality, particularly, cracking, breakage or the like was not observed in the honeycomb unit.

### (Example 6)

A honeycomb structure according to Example 6 was produced using the same steps as in Example 1.

However, in Example 6, the ratio Si/(Al+P) (molar ratio) of the SAPO particles was set to 0.23. Other conditions were the same as in the case of Example 1.

Meanwhile, as a result of producing a honeycomb unit and then visually observing the appearance of the honeycomb unit, any abnormality, particularly, cracking, breakage or the like was not observed in the honeycomb unit.

### (Example 7)

A honeycomb structure according to Example 7 was produced using the same steps as in Example 1.

However, in Example 7, the ratio Si/(Al+P) (molar ratio) of the SAPO particles was set to 0.23. In addition, the thickness of the cell wall in a honeycomb unit was set to 0.15 mm, and the cell density was set to 139 cells/cm². Also, the total length L of the honeycomb structure was set to 228 mm and the diameter R was set to 250 mm (therefore, the ratio R/L=1.10). Other conditions were the same as in the case of Example 1.

Meanwhile, as a result of producing the honeycomb unit and then visually observing the appearance of the honeycomb unit, any abnormality, particularly, cracking, breakage or the like was not observed in the honeycomb unit.

### (Example 8)

A honeycomb structure according to Example 8 was produced using the same steps as in Example 1.

However, in Example 8, the ratio Si/(Al+P) (molar ratio) of the SAPO particles was set to 0.28. Other conditions were the same as in the case of Example 1.

Meanwhile, as a result of producing a honeycomb unit and then visually observing the appearance of the honeycomb unit, any abnormality, particularly, cracking, breakage or the like was not observed in the honeycomb unit.

### (Comparative Example 1)

A honeycomb structure according to Comparative Example 1 was produced using the same steps as in Example 1.

However, in Comparative Example 1, the total length L of the honeycomb structure was set to 282 mm and the diameter R was set to 225 mm (therefore, the ratio R/L=0.80). Other conditions were the same as in the case of Example 1.

Meanwhile, as a result of producing a honeycomb unit and then visually observing the appearance of the honeycomb unit, it was confirmed that cracking occurred in the honeycomb unit.

### (Comparative Example 2)

An attempt was made to produce a honeycomb structure according to Comparative Example 2 using the same steps as in Example 1.

However, in Comparative Example 2, the thickness of the cell wall in a honeycomb unit was set to 0.05 mm, and the cell density was set to 155 cells/cm². Other conditions were the same as in the case of Example 1.

However, a honeycomb unit was broken while being assembled, and the honeycomb structure could not be produced.

### (Comparative Example 3)

A honeycomb structure according to Comparative Example 3 was produced using the same steps as in Example 1.

However, in Comparative Example 3, the thickness of the cell wall in a honeycomb unit was set to 0.28 mm, and the cell density was set to 93 cells/cm². Other conditions were the same as in the case of Example 1.

Meanwhile, as a result of producing the honeycomb unit and then visually observing the appearance of the honeycomb unit, it was confirmed that cracking occurred in the honeycomb unit.

### (Comparative Example 4)

A honeycomb structure according to Comparative Example 4 was produced using the same steps as in Example 1.

However, in Comparative Example 4, the cell density of the honeycomb unit was set to 77 cells/cm². Other conditions were the same as in the case of Example 1.

Meanwhile, as a result of producing a honeycomb unit and then visually observing the appearance of the honeycomb unit, any abnormality, particularly, cracking, breakage or the like was not observed in the honeycomb unit.

### (Comparative Example 5)

A honeycomb structure according to Comparative Example 5 was produced using the same steps as in Example 1.

However, in Comparative Example 5, the ratio Si/(Al+P) (molar ratio) of the SAPO particles was set to 0.15. Other conditions were the same as in the case of Example 1.

Meanwhile, as a result of producing a honeycomb unit and then visually observing the appearance of the honeycomb unit, it was confirmed that cracking occurred in the honeycomb unit.

### (Comparative Example 6)

A honeycomb structure according to Comparative Example 6 was produced using the same steps as in Example 1.

However, in Comparative Example 6, the ratio Si/(Al+P) (molar ratio) of the SAPO particles was set to 0.23. In addition, the total length L of the honeycomb structure was set to 238 mm and the diameter R was set to 252 mm (therefore, the ratio R/L=0.94). Other conditions were the same as in the case of Example 1.

Meanwhile, as a result of producing a honeycomb unit and then visually observing the appearance of the honeycomb unit, it was confirmed that cracking occurred in the honeycomb unit.

### (Comparative Example 7)

A honeycomb structure according to Comparative Example 7 was produced using the same steps as in Example 1.

However, in Comparative Example 7, the ratio Si/(Al+P) (molar ratio) of the SAPO particles was set to 0.23. In addition, the thickness of the cell wall in a honeycomb unit was set to 0.28 mm, and the cell density was set to 77 cells/cm². Other conditions were the same as in the case of Example 1.

Meanwhile, as a result of producing the honeycomb unit and then visually observing the appearance of the honeycomb unit, it was confirmed that cracking occurred in the honeycomb unit.

### (Comparative Example 8)

A honeycomb structure according to Comparative Example 8 was produced using the same steps as in Comparative Example 7.

However, in Comparative Example 8, the ratio Si/(Al+P) (molar ratio) of the SAPO particles was set to 0.28. In addition, the total length L of the honeycomb structure was set to 225 mm and the diameter R was set to 282 mm (therefore, the ratio R/L=0.80). Other conditions were the same as in the case of Comparative Example 7.

Meanwhile, as a result of producing a honeycomb unit and then visually observing the appearance of the honeycomb unit, it was confirmed that cracking occurred in the honeycomb unit.

Table 1 describes the summary of the ratios of Si/(Al+P), the thicknesses of the cell walls, the cell densities, the total lengths L, the diameters R and the ratios R/L of the respective honeycomb structures according to Examples 1 to 8 and Comparative Examples 1 to 8. In addition, Table 1 also describes the results of the appearance observation of the respective honeycomb units (the determination results of whether cracking occurred).

**[Table 1]**

| | Ratio Si/(Al+P) (molar ratio) | Thickness of cell wall (mm) | Cell density (cpsi) | Total length L (mm) | Diameter R (mm) | Ratio R/L | Evaluation results | |
|---|---|---|---|---|---|---|---|---|
| | | | | | | | Occurrence of cracking | NOx purification rate (%) |
| Example 1 | 0.16 | 0.20 | 800 | 200 | 267 | 1.34 | No | 86 |
| Example 2 | 0.16 | 0.10 | 1000 | 200 | 267 | 1.34 | No | 93 |
| Example 3 | 0.16 | 0.25 | 600 | 200 | 267 | 1.34 | No | 85 |
| Example 4 | 0.16 | 0.20 | 800 | 158 | 300 | 1.90 | No | 86 |
| Example 5 | 0.16 | 0.20 | 800 | 242.5 | 242.5 | 1.00 | No | 89 |
| Example 6 | 0.23 | 0.20 | 800 | 200 | 267 | 1.34 | No | 88 |
| Example 7 | 0.23 | 0.15 | 900 | 228 | 250 | 1.10 | No | 95 |
| Example 8 | 0.28 | 0.20 | 800 | 200 | 267 | 1.34 | No | 93 |
| Comparative Example 1 | 0.16 | 0.20 | 800 | 282 | 225 | 0.80 | Yes | - |
| Comparative Example 2 | 0.16 | 0.05 | 1000 | 200 | 267 | 1.34 | Broken | - |
| Comparative Example 3 | 0.16 | 0.28 | 600 | 200 | 267 | 1.34 | Yes | - |
| Comparative Example 4 | 0.16 | 0.20 | 500 | 200 | 267 | 1.34 | No | 77 |
| Comparative Example 5 | 0.15 | 0.20 | 800 | 200 | 267 | 1.34 | Yes | - |
| Comparative Example 6 | 0.23 | 0.20 | 800 | 252 | 238 | 0.94 | Yes | - |
| Comparative Example 7 | 0.23 | 0.28 | 500 | 200 | 267 | 1.34 | Yes | - |
| Comparative Example 8 | 0.28 | 0.28 | 500 | 282 | 225 | 0.80 | Yes | - |

### (NOx purification rate)

The NOx purification rates were measured using the respective honeycomb structures according to Examples 1 to 8 and Comparative Example 4 produced using the above methods. Meanwhile, for the honeycomb structures according to Comparative Examples 1, 3 and 5 to 8, since cracking occurred in the stage of the honeycomb units, the NOx purification rates were not measured. In addition, in Comparative Example 2, since a honeycomb structure could not be produced, the NOx purification rate was not measured.

In the measurement of the NOx purification rates, NOx purification rate measurement samples having dimensions of an outer diameter of 25.4 mm and a length of 76.2 mm, which were obtained by cutting the honeycomb unit portions of the respective honeycomb structures, were used.

The NOx purification rate was measured by circulating a test gas that simulated the operation conditions of vehicle diesel engines in the NOx purification rate measurement sample, carrying out a NOx treatment, and measuring the amount of nitrogen monoxide (NO) contained in the gas discharged from the NOx purification rate measurement sample.

The test gas had the following composition (volume ratio) :
- NO gas: 350 ppm,
- O₂ gas: 10%,
- H₂O gas: 5%,
- Ammonia gas: 350 ppm,
- CO₂ gas: 5%,
- N₂: balance.

The NOx purification rate measurement test began when the test gas was introduced into the honeycomb structure, and was continuously carried out until the concentration of NO contained in exhaust gas became almost constant. An apparatus (MEXA-1170NX) manufactured by Horiba, Ltd. was used in the measurement of the concentration of NO. The NO detection limit of the apparatus is 0.1 ppm. The test temperatures (of the honeycomb structure and the test gas) were set to 200°C, and maintained being constant throughout the entire test period.

An NOx purification rate N was computed from the obtained measurement result. Here, the NOx purification rate N was computed using

N(%)={(the concentration of NO in a gas mixture before being introduced into the NOx purification rate measurement sample - the concentration of NO in exhaust gas discharged from the NOx purification rate measurement sample)}/(the concentration of NO in a gas mixture before being introduced into the NOx purification rate measurement sample)×100 Formula (3).

The results of the NOx purification rate measurements are described in the rightmost column of Table 1.

It was found from the results in Table 1 that all the honeycomb structures (NOx purification rate measurement samples) according to Examples 1 to 8 had a NOx purification rate in a range of 85% to 95%, and had favorable NOx purification performance.

On the other hand, it was found that the honeycomb structure (NOx purification rate measurement sample) according to Comparative Example 4 had a NOx purification rate of 77%, and did not have favorable NOx purification performance.

### Reference Signs List

100, 101 HONEYCOMB STRUCTURE
110 FIRST END SURFACE
115 SECOND END SURFACE
120, 120a OUTER CIRCUMFERENCE COATING LAYER
121, 121a, 122 CELL
123, 123a, 124 CELL WALL
130, 130a, 131 HONEYCOMB UNIT
150, 151 ADHESION LAYER
200 HONEYCOMB STRUCTURE
301 SKELETON STRUCTURE OF SAPO
302 SKELETON STRUCTURE OF SAPO
305 SITE IN WHICH P ATOM IS SUBSTITUTED BY Si ATOM
305A TO 305D SITE IN WHICH P ATOM IS SUBSTITUTED BY Si ATOM

## Claims

1. A honeycomb structure comprising:
honeycomb units which contain silicoaluminophosphate particles and an inorganic binder and are provided with a plurality of cells that extend in the longitudinal direction from a first end surface to a second end surface of the honeycomb structure and are partitioned by cell walls,
wherein Si/(Al+P) of the silicoaluminophosphate particles is in a range of 0.16 to 0.33 by molar ratio,
a thickness of the cell wall is in a range of 0.10 mm to 0.25 mm,
a cell density of the cells is in a range of 93 cells/cm² to 155 cells/cm², and
a ratio R/L of a diameter R of the honeycomb structure to a total length L of the honeycomb structure is 1.0 or more.

2. The honeycomb structure according to Claim 1,
wherein the silicoaluminophosphate particles have a specific surface area in a range of 250 m²/g to 450 m²/g.

3. The honeycomb structure according to Claim 1 or 2,
wherein the silicoaluminophosphate is contained in a range of 230 g/L to 360 g/L with respect to the entire honeycomb structure.

4. The honeycomb structure according to any one of Claims 1 to 3,
wherein the ratio R/L is in a range of 1.0 to 5.0.

5. The honeycomb structure according to any one of Claims 1 to 4,
wherein the honeycomb unit further contains an inorganic fiber.

6. The honeycomb structure according to Claim 5,
wherein the inorganic fiber is one or more selected from a group consisting of alumina, silica, silicon carbide, silica alumina, glass, potassium titanate and aluminum borate.

7. The honeycomb structure according to any one of Claims 1 to 6, which is configured by joining a plurality of honeycomb units through an adhesion layer.

8. An exhaust gas purifying apparatus comprising:
a honeycomb structure;
a holding seal material installed around the honeycomb structure; and
a metal container accommodating the honeycomb structure around which the holding seal material is installed,
wherein the honeycomb structure is the honeycomb structure according to any one of Claims 1 to 7.

9. The exhaust gas purifying apparatus according to Claim 8,
wherein an NOx purification rate is 85% or more in a case in which 200°C-hot simulant gas is made to flow so that a space velocity becomes 80000/h,
when a volume of the honeycomb structure is defined as an apparent volume [m³] of the honeycomb structure in a case in which the honeycomb structure is assumed to be a dense bulk body having no cell and no pore, the space velocity is a ratio of a flow rate [m³/h] of the simulant gas to the apparent volume [m³] of the honeycomb structure, and,
the simulant gas contains nitrogen monoxide at a concentration of 350 ppm, ammonia at a concentration of 350 ppm, oxygen at a concentration of 10%, water at a concentration of 5% and carbon dioxide at a concentration of 5 vol% with a balance of nitrogen.
